# EUROPEAN PATENT SPECIFICATION

(11) **EP 3 787 417 B1**
(45) Date of publication and mention of the grant of the patent: **28.02.2024**
(21) Application number: 19796483.6
(22) Date of filing: 30.04.2019
(51) Int. Cl.: A23L 27/30, A23L 29/00, A23L 2/60

(54) **METHODS FOR IMPROVING THE SOLUBILITY OF STEVIOL GLYCOSIDE MIXTURES, AND USES**
VERFAHREN ZUR VERBESSERUNG DER LÖSLICHKEIT VON STEVIOLGLYCOSIDGEMISCHEN UND VERWENDUNGEN
PROCÉDÉS D'AMÉLIORATION DE LA SOLUBILITÉ DE MÉLANGES DE GLYCOSIDES DE STÉVIOL ET UTILISATIONS

(30) Priority: 30.04.2018 US 201862664643 P
(43) Date of publication of application: 10.03.2021
(60) Divisional application: 24153441.1
(73) Proprietor: The Coca-Cola Company, Atlanta, GA 30313 (US)
(72) Inventor: CHEN, Youlung, Marietta, GA 30068 (US); MA, Gil, Atlanta, GA 30308 (US); PRAKASH, Indra, Alpharetta, GA 30022 (US); HEO, Youngsuk, Cumming, GA 30041 (US)
(74) Representative: Dehns
(86) International application number: PCT/US2019/029849
(87) International publication number: WO 2019/213042

(56) References cited:
- WO-A1-2012/108894
- WO-A1-2012/109585
- WO-A1-2016/028899
- WO-A1-2016/100689
- WO-A1-2017/031301
- WO-A1-2017/059414
- JP-A- 2015 091 270
- US-A1- 2011 195 161
- US-A1- 2014 199 246
- US-A1- 2015 017 284
- US-A1- 2015 017 284

## Description

### FIELD OF THE INVENTION

The present invention relates generally to methods of improving the aqueous solubility of steviol glycoside blends containing relatively large amounts of reb M and/or reb D. The method comprises substituting some portion of the blend with other steviol glycosides, mogrosides and/or additives. Compositions, concentrates, beverages syrups and beverages comprising said blends with improved aqueous solubility are also provided herein.

### BACKGROUND OF THE INVENTION

Stevia is the common name for Stevia *rebaudiana* (Bertoni), a perennial shrub of the Asteracae (Compositae) family native to Brazil and Paraguay. Stevia leaves, the aqueous extract of the leaves, and purified steviol glycosides isolated from Stevia have been developed as sweeteners desirable as both non-caloric and natural in origin. Steviol glycosides isolated from Stevia *rebaudiana* include stevioside, rebaudioside A, rebaudioside C, dulcoside A, rubusoside, steviolbioside, rebaudioside B, rebaudioside D and rebaudioside F.

Reb M (also called rebaudioside X), (13-[(2-*O*-β-D-glucopyranosyl-3-*O*-β-D-glucopyranosyl-β-D-glucopyranosyl)oxy] *ent* kaur-16-en-19-oic acid-[(2-*O*-β-D-glucopyranosyl-3-*O*-β-D-glucopyranosyl-β-D-glucopyranosyl) ester], was isolated from Stevia *rebaudiana* and characterized:

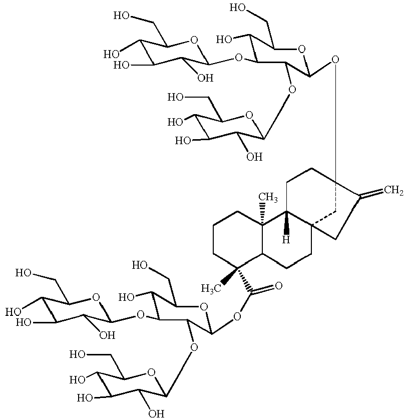

Many steviol glycosides are present in minute quantities in Stevia *rebaudiana,* including Reb M which represents only about 0.05%-0.5% by weight of the leaf. Recently, it was found that Reb M could be used as a sweetener for beverages.

Certain steviol glycosides and blends of steviol glycosides that are desirable for use as sweeteners have poor aqueous solubility. For example, a crystalline composition reb M containing about 75-90% reb M and about 25-10% rebaudioside D by weight cannot be dissolved above concentrations of 0.1-0.15 wt% at room temperature. Pure reb M has an aqueous solubility of 0.1 wt%. Pure reb D has an aqueous solubility of 0.05 wt%. Crystalline A95 has an aqueous solubility of about 0.05 wt%.

The low aqueous solubility these steviol glycosides and blends possess does not necessarily impose issues for their use in finished beverages (less than about 600 ppm). However, their intrinsic solubility poses formulation challenges for concentrated syrups that are ultimately diluted to ready-to-drink beverages, e.g. beverages prepared from syrups with 1:3-1:8 throw ratios. Typically, these syrup concentrates are from 0.25 wt% to about 0.4 wt%, far above the aqueous solubility of the steviol glycosides and blends.

The low intrinsic aqueous solubility of the steviol glycosides or blends may result in undesirable crystal flake precipitation during processing, which may alter taste profile and block dispenser nozzles.

Increasing the temperature of the steviol glycoside solution can increase the solubility, as can the addition of co-solvents such as ethanol. However, these approaches are not compatible with the syrup manufacture process.

A reb M dosing skid has been developed to address the solubility issues when formulating syrups into full strength beverages at the bottler stage, but such equipment is expensive and must be installed at every bottler.

As such, there remains a need for methods to provide concentrated solutions of steviol glycoside sweeteners typical of beverage syrups.

US 2015/017284 discloses rebaudioside M compositions with improved aqueous solubility and methods for preparing the same. WO 2017/031301 discloses steviol glycoside solutions, and methods of making steviol glycoside solutions.

### SUMMARY OF THE INVENTION

The present invention generally relates to methods of improving the aqueous solubility of a steviol glycoside blend comprising substituting from about 10 wt% to about 70 wt% of said steviol glycoside blend with at least one of the following: (i) a composition comprising reb A wherein said composition further comprises mogroside V; (ii) reb E, (iii) a composition comprising at least one mogroside selected from the group consisting of mogroside V, mogroside IV, siamenoside I and the 1,6-α-isomer of siamenoside I (mogro-3-O-[β-D-glucopyranoside]-24-O-{[β-D-glucopyranosyl-(1→2)]-[α-D-glucopyranosyl-(1→6)]-β-D-glucopyranoside}) and combinations thereof and (iv) a composition comprising enzyme modified isoquercitrin (EMIQ); to provide an improved blend having an aqueous solubility of at least about 0.25 wt%.

Steviol glycoside blends for use in the present methods are selected from (i) a steviol glycoside mixture comprising reb M and (ii) a steviol glycoside mixture comprising reb D. The steviol glycoside blend can be amorphous, crystalline or a combination of amorphous and crystalline.

The methods described herein provide improved blends that have greater aqueous solubility compared to the aqueous solubility of the steviol glycoside blend when both measured at the same wt%, such as, for example, at least about 2.5x (times) greater.

In yet another aspect, the present invention provides blends with improved aqueous solubility and compositions containing the same.

In one aspect, a method of improving the aqueous solubility of an amorphous steviol glycoside blend comprises substituting from about 10 wt% to about 40 wt% of said amorphous steviol glycoside blend with at least one of the following: (i) a composition comprising reb A wherein said composition further comprises mogroside V; (ii) reb E, (iii) a composition comprising at least one mogroside selected from the group consisting of mogroside V, mogroside IV, siamenoside I and the 1,6-α-isomer of siamenoside I (mogro-3-O-[β-D-glucopyranoside]-24-O-{[β-D-glucopyranosyl-(1→2)]-[α-D-glucopyranosyl-(1→6)]-(β-D-glucopyranoside}) and combinations thereof, to provide an improved blend having an aqueous solubility of at least about 0.25 wt%.

In another aspect, the present invention relates to a method of improving the aqueous solubility of an amorphous steviol glycoside blend comprising substituting from about 40 wt% to about 70 wt% of said steviol glycoside blend with a composition comprising enzyme modified isoquercitrin (EMIQ) to provide a blend having an aqueous solubility of at least about 0.25 wt%.

In still another aspect, the present invention relates to method for improving the aqueous solubility of a crystalline steviol glycoside blend comprising substituting from about 10 wt% to about 40 wt% of the steviol glycoside blend with one of the following: a composition comprising reb A wherein said composition further comprises mogroside V, a composition comprising at least one mogroside selected from the group consisting of mogroside V, mogroside IV, siamenoside I and the 1,6-α-isomer of siamenoside I (mogro-3-O-[β-D-glucopyranoside]-24-O-{[β-D-glucopyranosyl-(1→2)]-[α-D-glucopyranosyl-(1→6)]-β-D-glucopyranoside}) and combinations thereof.

The present invention also relates to blends comprising comprises from about 30 wt% to about 90 wt% of a steviol glycoside blend and from about 10 wt% to about 70 wt% of one of the following: (i) a composition comprising reb A wherein said composition further comprises mogroside V; (ii) reb E; (iii) a composition comprising at least one mogroside selected from the group consisting of mogroside V, mogroside IV, siamenoside I and the 1,6-α-isomer of siamenoside I (mogro-3-O-[β-D-glucopyranoside]-24-O-{[β-D-glucopyranosyl-(1→2)]-[α-D-glucopyranosyl-(1→6)]-β-D-glucopyranoside}) and combinations thereof, and (iv) a composition comprising enzyme modified isoquercitrin (EMIQ), wherein the blend has an aqueous solubility of at least about 0.25 wt%.

The blends can be used to prepare concentrates, beverage syrups and, ultimately, beverages. The beverages can contain one or more additional sweeteners, functional ingredients, additives and combinations thereof.

### DETAILED DESCRIPTION OF THE INVENTION

### I. Definitions

"Syrup" or "Beverage syrup", as used herein, refers to a beverage precursor to which a fluid, typically water, is added to form a ready-to-drink beverage, or a "beverage." Typically, the volumetric ratio of syrup to water is between 1:3 to 1:8, more typically between 1:4 and 1:5. The volumetric ratio of syrup to water also is expressed as a "throw." A 1:5 ratio, which is a ratio commonly used within the beverage industry, is known as a "1+5 throw."

"Beverage", as used herein, refers to liquids suitable for human consumption.

"Aqueous solubility" is the concentration of the chemical in the aqueous phase, when the solution is in. equilibrium with the pure compound in its usual phase (gas, liquid or solid) at a specified temperature. It is commonly expressed as a concentration, either by mass, molarity, molality, mole fraction, or other similar descriptions of concentration.

### II. Methods

The present invention provides a method for improving the aqueous solubility of certain steviol glycoside blends comprising high amounts of reb M and/or reb D that have desirable taste profiles but relatively poor aqueous solubility.

In one embodiment, a method of improving the aqueous solubility of a steviol glycoside blend comprises substituting from about 10 wt% to about 70 wt% of said steviol glycoside blend with one of the following: (i) a composition comprising reb A wherein said composition further comprises mogroside V; (ii) reb E, (iii) a composition comprising at least one mogroside selected from the group consisting of mogroside V, mogroside IV, siamenoside I and the 1,6-α-isomer of siamenoside I (mogro-3-O-[β-D-glucopyranoside]-24-O-{[β-D-glucopyranosyl-(1→2)]-[α-D-glucopyranosyl-(1→6)]-β-D-glucopyranoside}) and combinations thereof and (iv) a composition comprising enzyme modified isoquercitrin (EMIQ) to provide a blend having an aqueous solubility of at least about 0.25 wt%. This method provides a blend with improved aqueous solubility, i.e. a "blend of the present invention".

Steviol glycoside blends for use in the methods and compositions described herein (hereinafter "steviol glycoside blends") are selected from (i) a steviol glycoside mixture comprising reb M and (ii) a steviol glycoside mixture comprising reb D.

The steviol glycoside mixture comprising reb M contains at least about 80% reb M by weight, such as, for example, at least about 85% by weight, at least about 90% by weight, at least about 95% by weight, at least about 97% by weight or any range in between.

The steviol glycoside mixture comprising reb M can be RebM80. "RebM80" refers to a steviol glycoside mixture containing at least 80% reb M by weight (the majority of the remainder is Reb D and Reb A). The total steviol glycoside content of the mixture is at least 95%.

The steviol glycoside mixture comprising reb M can also be 95% reb M, i.e. a steviol glycoside mixture comprising reb M in about 95% by weight.

The steviol glycoside mixtures comprising reb M can be amorphous, crystalline or a mixture of amorphous and crystalline forms. The aqueous solubility of amorphous reb M is ~ 0.1 wt%. The aqueous solubility of crystalline RebM80 is ~0.15 wt%.

The "steviol glycoside mixture comprising reb D" contains at least 60% reb D by weight such as, for example, at least about 70% by weight, at least about 80% by weight, at least about 90% by weight, at least about 95% by weight, at least about 97% by weight or any range in between. The steviol glycoside mixture comprising reb D also preferably contains at least 20% reb M by weight. The total steviol glycoside content of the mixture is at least 95%. An exemplary steviol glycoside mixture comprising reb D, "A95", is provided in the examples.

The steviol glycoside mixture comprising reb D can be amorphous, crystalline or a mixture of amorphous and crystalline forms. The aqueous solubility of crystalline reb D is -0.05 wt%. The aqueous solubility of crystalline A95 is -0.05%. The aqueous solubility of amorphous A95 is >0.3 wt%.

From about 10 wt% to about 70 wt% of the steviol glycoside blend can be substituted with one of (i)-(iv), above, such as, for example, from about 10 wt% to about 60 wt%, from about 10 wt% to about 50 wt%, from about 10 wt% to about 40 wt%, from about 10 wt% to about 30 wt%, from about 10 wt% to about 20 wt%, from about 20 wt% to about 70 wt%, from about 20 wt% to about 60 wt%, from about 20 wt% to about 50 wt%, from about 20 wt% to about 40 wt%, from about 20 wt% to about 30 wt%, from about 30 wt% to about 70 wt%, from about 30 wt% to about 60 wt%, from about 30 wt% to about 50 wt%, from about 30 wt% to about 40 wt%, from about 40 wt% to about 70 wt%, from about 40 wt% to about 60 wt%, from about 40 wt% to about 50 wt%, from about 50 wt% to about 70 wt%, from about 50 wt% to about 60 wt% and from about 60 wt% to about 70 wt%.

The blends resulting from the methods described herein (hereinafter "blends of the present invention") have greater aqueous solubility compared to the aqueous solubility of the steviol glycoside mixture comprising reb M or reb D (i.e. the steviol glycoside blends without substitution) when measured at the same wt%, such as, for example, at least about 2.5x (times) greater, at least about 3.0x greater, at least about 3.5x greater, at least about 4.0x greater, at least about 4.5x greater, at least about 5.0x greater, at least about 5.5x greater, at least about 6.0x greater, at least about 6.5x greater, at least about 7.0x greater, at least about 7.5x greater, at least about 8.0x greater, at least about 8.5x greater, at least about 9.0x greater, at least about 9.5x greater, at least about 10.x greater or any range between.

The blends of the present invention have an aqueous solubility of at least about 0.25 wt%, such as, for example, at least about 0.3 wt%, at least about 0.4 wt%, at least about 0.5 wt%, at least about 0.6 wt%, at least about 0.7 wt%, at least about 0.8 wt%, at least about 0.9 wt%, at least about 1.0 wt%, at least about 1.5 wt%, at least about 2.0 wt%, at least about 2.5 wt%, at least about 3.0 wt% or any range between.

A number of methods are known in the art for determining aqueous solubility. In one such method, solubility can be determined by a solvent addition method in which a weighed sample is treated with aliquots of aqueous solvent. The mixture is generally vortexed and/or sonicated between additions to facilitate dissolution. Complete dissolution of the test material is determined by visual inspection. Solubility is calculated based on the total solvent used to provide complete dissolution.

Another method for determining solubility is by measuring the turbidity (NTU units) of a composition using a turbidimeter, such as HACH 2100 AN. In a typical experiment, a portion of the composition to be measured is added to a portion of of aqueous solvent (or visa versa) at room temperature. Turbidity is measured after waiting from 2-10 minutes to observe visual dissolution of the portion. Then, another portion of the composition is added, dissolution is observed and turbidity is measured again. This process is repeated until turbidity reaches exceeds beyond acceptable values, typically around 4 NTU-10 NTU. While turbidity measurements can be very useful in determining solubility, it will not detect solids collected on the bottom of a container. Accordingly, it is important to shake the container prior to determining turbidity and confirm a given turbidity measurement with visual inspection of dissolution.

In either method, the amount of composition added divided by the weight of water times 100 provides the solubility in (% w/w). For example, if 0.18 g of sample can be dissolved in 30 mL of water, the solubility in water is 0.6%.

Solubility over time for a particular concentration of a composition can be measured using a similar procedure. In a typical experiment at 0.3% (w/w) concentration, 0.09 g of the composition to be measured is added to 30 mL of water at room temperature. The mixture is stirred for 5-45 minutes, at which point all of the sample should be dissolved, and then allowed to stand without disturbing. Turbidity is then measured at the desired time points to determine whether, and when, any material comes out of solution.

Unless specified otherwise, the purity of the reb, GSG or mogroside is at least about 95% by weight.

In one embodiment, from about 10 wt% to about 30 wt% of the steviol glycoside blend can be substituted with reb A, reb A/reb B, glucosylated steviol glycosides, reb E and mogroside V, such as, for example, from about 10 wt% to about 30 wt%, from about 10 wt% to about 20 wt%, from about 20 wt% to about 40 wt%, from about 20 wt% to about 30 wt% or from about 30 wt% to about 40 wt%.

In one embodiment, a method for improving the aqueous solubility of a steviol glycoside blend comprises substituting from about 10 wt% to about 40 wt% of said steviol glycoside blend with a composition comprising reb A to provide a blend of the present invention with improved aqueous solubility. The composition further comprises mogroside V. The composition comprising reb A contains at least about 50 wt% reb A, such as, for example, at least about 75 wt% reb A, at least about 80 wt% reb A, at least about 85 wt% reb A, at least about 90 wt% reb A or at least about 95 wt% reb A. In one embodiment, the composition comprising reb A consists essentially of reb A. In one embodiment, from about 10 wt% to about 40 wt% of the steviol glycoside blend is substituted with reb A, such as, for example, from about 20 wt% to about 35 wt% substitution. In another embodiment, from about 10 wt% to about 40 wt% of the steviol glycoside blend is substituted with a composition comprising reb A, such as, for example, from about 20 wt% to about 35 wt% substitution.

The composition comprising reb A can further comprise a reb A/reb B blend (e.g. Alpha from Pure Circle). In one embodiment, the composition comprising reb A consists essentially of reb A and a reb A/reb B blend. The relative contributions of reb A and reb A/reb B in the composition can vary from about 10 wt% to about 90 wt% reb A and from about 90 wt% to about 10 wt % reb A/reb B blend. In a particular embodiment, from about 25 wt% to about 45 wt% of the steviol glycoside blend is substituted with a composition comprising reb A that consists essentially of a reb A/reb B blend, such as for example, from about 30 wt% to about 40 wt%.

The composition comprising reb A can further comprise at least one mogroside selected from the group consisting of mogroside IV, siamenoside I and the 1,6-α-isomer of siamenoside I (mogro-3-O-[β-D-glucopyranoside]-24-O-{[β-D-glucopyranosyl-(1→2)]-[α-D-glucopyranosyl-(1→6)]-β-D-glucopyranoside}) and combinations thereof. The composition comprising reb A further comprises mogroside V. In one embodiment, the composition comprising reb A consists essentially of reb A and mogroside V. In another embodiment, the composition comprising reb A consists of reb A and mogroside V. The relative contributions of reb A and at least one mogroside in the composition can vary from about 10 wt% to about 90 wt% reb A and from about 99.5 wt% to about 0.5 wt% mogroside V. In a particular embodiment, the composition comprising reb A comprises about 65 wt% to about 70 wt% of the at least one mogroside and from about 35 wt% to about 30 wt% reb A. In a particular embodiment, from about 10 wt% to about 40 wt% of the steviol glycoside blend is replaced with a composition comprising reb A further comprising at least one mogroside, such as, for example, greater than about 25 wt% substitution, from about 25% to about 50% wt% substitution or from about 25 wt% to about 35 wt% substitution.

A method for improving the aqueous solubility of a steviol glycoside blend comprises substituting from about 10 wt% to about 40 wt% of said steviol glycoside blend with reb E. In a more particular embodiment, from about 10 wt% to about 30 wt% of the steviol glycoside blend is substituted with reb E.

A method for improving the aqueous solubility of a steviol glycoside blend comprises substituting from about 10 wt% to about 40 wt% of said steviol glycoside blend with a composition comprising at least one mogroside selected from the group consisting of mogroside V, mogroside IV, siamenoside I and the 1,6-α-isomer of siamenoside I (mogro-3-O-[β-D-glucopyranoside]-24-O-{[β-D-glucopyranosyl-(1→2)]-[α-D-glucopyranosyl-(1→6)]-β-D-glucopyranoside}) and combinations thereof, such as, for example, substituting from about 10 wt% to about 30 wt% or from about 30 wt% to about 40 wt% of the steviol glycoside blend. In one embodiment, the composition comprising at least one mogroside consists essentially of mogroside V. In another embodiment, the composition comprising at least one mogroside consists of mogroside V.

A method for improving the aqueous solubility of a steviol glycoside blend comprises substituting from about 40 wt% to about 70 wt% of said steviol glycoside blend with a composition comprising enzyme modified isoquercitrin (EMIQ), such as, for example, substituting from about 40 wt% to about 60 wt%, from about 40 wt% to about 50 wt%, from about 50 wt% to about 70 wt% or from about 60 wt% to about 70 wt% of the steviol glycoside blend. In one embodiment, the composition comprising EMIQ consists essentially of EMIQ. In another embodiment, the composition comprising EMIQ consists of EMIQ. In still another embodiment, the composition comprising EMIQ can further comprise reb A. In one embodiment, the composition comprising EMIQ consists essentially of EMIQ and reb A. In another embodiment, the composition comprising EMIQ consists of EMIQ and reb A. The relative contributions of EMIQ and reb A in the composition can vary from about 10 wt% to about 90 wt% EMIQ and from about 90 wt% to about 10 wt% reb A. In a particular embodiment, the composition comprising EMIQ comprises from about 70 wt% to about 80 wt% EMIQ and about 15 wt% to about 25 wt% reb A. In yet another embodiment, the composition comprising EMIQ can further comprise reb A and glucosylated steviol glycosides. In one embodiment, the composition comprising EMIQ consists essentially of EMIQ, reb A and glucosylated steviol glycosides. In another embodiment, the composition comprising EMIQ consists of EMIQ, reb A and glucosylated steviol glycosides. The relative contributions of EMIQ, reb A and glucosylated steviol glycosides in the composition can vary from about 75 wt% to about 90 wt% EMIQ, from about 5 wt% to about 10 wt% reb A and from about 5 wt% to about 10 wt% glucosylated steviol glycosides. In a further embodiment, the composition comprising EMIQ can further comprise glucosylated steviol glycosides. In one embodiment, the composition comprising EMIQ consists essentially of EMIQ and glucosylated steviol glycosides. In another embodiment, the composition comprising EMIQ consists of EMIQ and glucosylated steviol glycosides. The relative contributions of EMIQ and glucosylated steviol glycosides in the composition can vary from about 10 wt% to about 90 wt% EMIQ and from about 90 wt% to about 10 wt% glucosylated steviol glycosides. In a particular embodiment, the composition comprising EMIQ comprises from about 75 wt% to about 90 wt% EMIQ and about 10 wt% to about 20 wt% glucosylated steviol glycosides.

### III. Compositions

The present invention also provides "blends of the present invention", resulting from the methods described above, with improved solubility, as well as compositions containing the same. "Compositions" can also refer to, e.g. blends of the present invention in combination with additional ingredients (in solid or liquid form), concentrates, beverage syrups and ready-to-drink beverages.

### A. Blends

In one embodiment, a blend of the present invention comprises (i) from about 30 wt% to about 90 wt% of a steviol glycoside blend (as defined above) and (ii) from about 10 wt% to about 70 wt% of one of the following: (a) a composition comprising reb A wherein said composition further comprises mogroside V; (b) reb E; (c) a composition comprising at least one mogroside selected from the group consisting of mogroside V, mogroside IV, siamenoside I and the 1,6-α-isomer of siamenoside I (mogro-3-O-[β-D-glucopyranoside]-24-O-{[β-D-glucopyranosyl-(1→2)]-[α-D-glucopyranosyl-(1→6)]-β-D-glucopyranoside}) and combinations thereof; and (d) a composition comprising enzyme modified isoquercitrin, wherein the blend of the present invention has improved aqueous solubility compared to the steviol glycoside blend.

The steviol glycoside blend (i) can comprise from about 30 % to about 90% by weight of the blend, such as, for example, from about 30 wt% to about 80 wt%, from about 30 wt% to about 70 wt%, from about 30 wt% to about 60 wt%, from about 30 wt% to about 50 wt%, from about 30 wt% to about 40 wt%, from about 40 wt% to about 90 wt%, from about 40 wt% to about 80 wt%, from about 40 wt% to about 70 wt%, from about 40 wt% to about 60 wt%, from about 40 wt% to about 50 wt%, from about 50 wt% to about 90 wt%, from about 50 wt% to about 80 wt%, from about 50 wt% to about 70 wt%, from about 50 wt% to about 60 wt%, from about 60 wt% to about 90 wt%, from about 60 wt% to about 80 wt%, from about 60 wt% to about 70 wt%, from about 70 wt% to about 90 wt%, from about 70 wt% to about 80 wt% or from about 80 wt% to about 90 wt%.

The steviol glycoside blend can be amorphous form, crystalline form or a combination of amorphous and crystalline forms.

Meanwhile, (ii) can comprise from about 10 wt% to about 70 wt% of the blend, such as, for example, from about 10 wt% to about 60 wt%, from about 10 wt% to about 50 wt%, from about 10 wt% to about 40 wt%, from about 10 wt% to about 30 wt%, from about 10 wt% to about 20 wt%, from about 20 wt% to about 70 wt%, from about 20 wt% to about 60 wt%, from about 20 wt% to about 50 wt%, from about 20 wt% to about 30 wt%, from about 30 wt% to about 70 wt%, from about 30 wt% to about 60 wt%, from about 30 wt% to about 50 wt%, from about 30 wt% to about 40 wt%, from about 50 wt% to about 70 wt%, from about 50 wt% to about 60 wt% and from about 60 wt% to about 70 wt%.

The blends of the present invention have greater aqueous solubility compared to the aqueous solubility of the steviol glycoside mixture comprising reb M or reb D (i.e. the steviol glycoside blends without substitution) when measured at the same wt%, such as, for example, at least about 2.5x (times) greater, at least about 3.0x greater, at least about 3.5x greater, at least about 4.0x greater, at least about 4.5x greater, at least about 5.0x greater, at least about 5.5x greater, at least about 6.0x greater, at least about 6.5x greater, at least about 7.0x greater, at least about 7.5x greater, at least about 8.0x greater, at least about 8.5x greater, at least about 9.0x greater, at least about 9.5x greater, at least about 10.x greater or any range between.

The blends of the present invention have an aqueous solubility of at least about 0.25 wt%, such as, for example, at least about 0.3 wt%, at least about 0.4 wt%, at least about 0.5 wt%, at least about 0.6 wt%, at least about 0.7 wt%, at least about 0.8 wt%, at least about 0.9 wt%, at least about 1.0 wt%, at least about 1.5 wt%, at least about 2.0 wt%, at least about 2.5 wt%, at least about 3.0 wt% or any range between.

In one embodiment, a blend of the present invention comprises (i) from about 60 wt% to about 90 wt% of a steviol glycoside blend and (ii) from about 10 wt% to about 40 wt% of a composition comprising reb A wherein said composition further comprises mogroside V, as described above. The composition comprising reb A contains at least about 50 wt% reb A, such as, for example, at least about 75 wt% reb A, at least about 80 wt% reb A, at least about 85 wt% reb A, at least about 90 wt% reb A or at least about 95 wt% reb A. In one embodiment, the composition comprising reb A consists essentially of reb A. In one embodiment, a blend of the present invention comprises (i) from about 60 wt% to about 90 wt% of a steviol glycoside blend and (ii) from about 10 wt% to about 40 wt% reb A, such as, for example, from about 20 wt% to about 35 wt% reb A. In another embodiment, a blend of the present invention comprises (i) from about 60 wt% to about 90 wt% of a steviol glycoside blend and (ii) from about 10 wt% to about 40 wt% of a composition comprising reb A, such as, for example, from about 20 wt% to about 35 wt% of the composition comprising reb A.

The composition comprising reb A can further comprise a reb A/reb B blend (e.g. Alpha from Pure Circle). In one embodiment, the composition comprising reb A consists essentially of reb A and a reb A/reb B blend. The relative contributions of reb A and reb A/reb B in the composition can vary from about 10 wt% to about 90 wt% reb A and from about 90 wt% to about 10 wt % reb A/reb B blend. In a particular embodiment, a blend of the present invention comprises (i) from about 55 wt% to about 75 wt% of a steviol glycoside blend and (ii) from about 25 wt% to about 45 wt% of a composition comprising reb A that consists essentially of a reb A/reb B blend, such as for example, from about 30 wt% to about 40 wt% of a composition comprising reb A that consists essentially of a reb A/reb B blend.

The composition comprising reb A can further comprise at least one mogroside selected from mogroside IV, siamenoside I and the 1,6-α-isomer of siamenoside I (mogro-3-O-[β-D-glucopyranoside]-24-O-{[β-D-glucopyranosyl-(1→2)]-[α-D-glucopyranosyl-(1→6)]-β-D-glucopyranoside}) and combinations thereof. The composition comprising reb A further comprises mogroside V. In one embodiment, the composition comprising reb A consists essentially of reb A and mogroside V. In another embodiment, the composition comprising reb A consists of reb A and mogroside V. The relative contributions of reb A and mogroside V in the composition can vary from about 10 wt% to about 90 wt% reb A and from about 99.5 wt% to about 0.5 wt% at least one mogroside. In a particular embodiment, the composition comprising reb A comprises about 65 wt% to about 70 wt% of the at least one mogroside and from about 35 wt% to about 30 wt% reb A. In a particular embodiment, a blend of the present invention comprises (i) from about 60 wt% to about 90 wt% of a steviol glycoside blend and (ii) from about 10 wt% to about 40 wt% of a composition comprising reb A further comprising at least one mogroside, such as, for example, from about 25 wt% to about 35 wt% of a composition comprising reb A further comprising at least one mogroside.

In one embodiment, a blend of the present invention comprises (i) from about 60 wt% to about 90 wt% of a steviol glycoside blend and (ii) from about 10 wt% to about 40 wt% reb E. In a more particular embodiment, the blend of the present invention comprises from about 10 wt% to about 30 wt% reb E.

In one embodiment, a steviol glycoside blend of the present invention comprises (i) from about 60 wt% to about 90 wt% of a steviol glycoside blend and (ii) from about 10 wt% to about 40 wt% of a composition comprising at least one mogroside selected from the group consisting of mogroside V, mogroside IV, siamenoside I and the 1,6-α-isomer of siamenoside I (mogro-3-O-[β-D-glucopyranoside]-24-O-{[β-D-glucopyranosyl-(1→2)]-[α-D-glucopyranosyl-(1→6)]-β-D-glucopyranoside}) and combinations thereof, such as, for example, from about 10 wt% to about 30 wt%, or from about 30 wt% to about 40 wt% of a composition comprising at least one mogroside. In one embodiment, the composition comprising at least one mogroside consists essentially of mogroside V. In another embodiment, the composition comprising at least one mogroside consists of mogroside V.

In one embodiment, a blend of the present invention comprises (i) from about 30 wt% to about 60 wt% of a steviol glycoside blend and (ii) from about 40 wt% to about 70 wt% of a composition comprising enzyme modified isoquercitrin (EMIQ). In more particular EMIQ embodiments, (i) can be from about 30 wt% to about 50% of the blend of the present invention, from about 30 wt% to about 40 wt% of the blend of the present invention, from about 40 wt% to about 60 wt% of the blend of the present invention, from about 40 wt% to about 50 wt% of the blend of the present invention or from about 50 wt% to about 60 wt% of the blend of the present invention. Moreover, (ii) can be from about 40 wt% to about 60 wt% of the blend of the present invention, from about 40 wt% to about 50 wt% of the blend of the present invention, from about 50 wt% to about 70 wt%, from about 50 wt% to about 60 wt% or from about 60 wt% to about 70 wt% of the blend of the present invention. In one embodiment, the composition comprising EMIQ consists essentially of EMIQ. In another embodiment, the composition comprising EMIQ consists of EMIQ.

In still another embodiment, the composition comprising EMIQ can further comprise reb A. In one embodiment, the composition comprising EMIQ consists essentially of EMIQ and reb A. In another embodiment, the composition comprising EMIQ consists of EMIQ and reb A. The relative contributions of EMIQ and reb A in the composition can vary from about 10 wt% to about 90 wt% EMIQ and from about 90 wt% to about 10 wt% reb A. In a particular embodiment, the composition comprising EMIQ comprises from about 70 wt% to about 80 wt% EMIQ and about 15 wt% to about 25 wt% reb A.

In yet another embodiment, the composition comprising EMIQ can further comprise reb A and glucosylated steviol glycosides. In one embodiment, the composition comprising EMIQ consists essentially of EMIQ, reb A and glucosylated steviol glycosides. In another embodiment, the composition comprising EMIQ consists of EMIQ, reb A and glucosylated steviol glycosides. The relative contributions of EMIQ, reb A and glucosylated steviol glycosides in the composition can vary from about 75 wt% to about 90 wt% EMIQ, from about 5 wt% to about 10 wt% reb A and from about 5 wt% to about 10 wt% glucosylated steviol glycosides.

In a further embodiment, the composition comprising EMIQ can further comprise glucosylated steviol glycosides. In one embodiment, the composition comprising EMIQ consists essentially of EMIQ and glucosylated steviol glycosides. In another embodiment, the composition comprising EMIQ consists of EMIQ and glucosylated steviol glycosides. The relative contributions of EMIQ and glucosylated steviol glycosides in the composition can vary from about 10 wt% to about 90 wt% EMIQ and from about 90 wt% to about 10 wt% glucosylated steviol glycosides. In a particular embodiment, the composition comprising EMIQ comprises from about 75 wt% to about 90 wt% EMIQ and about 10 wt% to about 20 wt% glucosylated steviol glycosides.

### B. Concentrates

The present invention also provides concentrates comprising water and a blend of the present invention or a composition comprising a blend of the present invention (hereinafter "concentrates of the present invention").

Concentrates of the present invention contain blends of the present invention in concentrations of about 0.25 wt% to about 3 wt%, such as, for example, at least about 0.3 wt%, at least about 0.4 wt%, at least about 0.5 wt%, at least about 0.6 wt%, at least about 0.7 wt%, at least about 0.8 wt%, at least about 0.9 wt% or at least about 1.0 wt%, at least about 1.5 wt%, at least about 2.0 wt%, about 3.0 wt% or any range between. In one embodiment, the concentrates are about 0.25 wt% to about 0.4 wt%.

Concentrates of the present invention are solutions, i.e. they are not cloudy and there are no precipitates or particulates present for at least about 6 hours after preparation. In some embodiments, the concentrate is clear by visual inspection for at least 1 day, at least 3 days, at least 7 days, at least 14 days, at least one month, at least 3 months or at least 6 months or more.

In one embodiment, a concentrate of the present invention is prepared from a super concentrate. The super concentrate is prepared by (i) combining the relevant blend of the present invention and water at room temperature to provide a mixture (both the blend of the present invention and water are present in amounts necessary to provide the desired super concentrate steviol glycoside concentration/wt%) and (ii) stirring the mixture at room temperature for at least 10 minutes. The stirring time can vary depending on the amounts of both blend and water used. As such, the mixture can be stirred for at least 1 hour, at least 3 hours, at least 5 hours, at least 10 hours or at least 24 hours. The resulting super concentrate is a cloudy mixture, i.e. not a solution.

The concentrates of the present invention are prepared by (i) diluting the super concentrate to the desired steviol glycoside concentration/wt% with water and (ii) mixing for at least 10 minutes. Again, the mixing time can vary. As such, the mixture can be stirred for at least 1 hour, at least 24 hours or at least 90 hours.

Alternatively, the concentrates of the present invention are prepared by (i) combining the relevant blend of the present invention and water at room temperature in the relevant amounts required to achieve the desired blend concentration/wt% and (ii) mixing for at least 10 minutes. Again, the mixing time can vary. As such, the mixture can be stirred for at least 1 hour, at least 24 hours or at least 90 hours.

### C. Beverage Syrups

The present invention also provides beverage syrups comprising blends of the present invention. In one embodiment, a method of making a beverage syrup comprises combining one or more beverage syrup ingredients with a concentrate of the present invention. In one embodiment, the one or more beverage syrup ingredients are added to a concentrate to provide a beverage syrup.

In other embodiments, a concentrate of the present invention can be diluted prior to combination with beverage syrup ingredients. The dilution can be done at once or in a serial fashion. The temperature for dilution is preferably the same temperature at which the beverage syrup ingredients are formulated, typically room temperature- but not above about 70 °C for steviol glycosides or other thermally sensitive ingredients.

The skilled practitioner recognizes that beverage syrup ingredients can be added singularly or in combination. Also, solutions of dry beverage syrup ingredients can be made and used to add to the bulk quantity of water. Beverage syrup ingredients typically are added to the bulk quantity of water in an order that minimizes potential adverse interactions between ingredients or potential adverse effect on an ingredient. For example, nutrients that are temperature-sensitive might be added during a relatively low-temperature portion toward the end of the manufacturing process. Similarly, flavors and flavor compounds often are added just before completion of the syrup to minimize potential loss of volatile components and to minimize flavor loss in any form. Often, acidification is one of the last steps, typically carried out before temperature-sensitive, volatile, and flavor materials are added. Thus, flavors or flavor components or other volatile materials and nutrients typically are added at an appropriate time and at an appropriate temperature.

Beverage syrup ingredients include, but are not limited to, the additional sweeteners, functional ingredients and additives provided hereinabove.

The amount of additional sweetener in the beverage syrup can vary. In one embodiment, the beverage syrup comprises from about 1 ppm to about 10 wt% additional sweetener.

The amount of functional ingredient in the beverage syrup can vary. In one embodiment, the beverage syrup comprises from about 1 ppm to about 10 wt% of a functional ingredient.

The amount of additive in the beverage syrup can vary. In one embodiment, the beverage syrup comprises from about 1 ppm to about 10 wt% of an additive.

The pH of the beverage syrup is typically from about 2.0 to about 5, such as, for example, from about 2.5 to about 4. The pH may be adjusted by addition of a suitable acid or base such as, but not limited to phosphoric acid, citric acid, or sodium hydroxide.

The resulting beverage syrup can be packaged and optionally stored. Alternatively, a beverage syrup may be used essentially immediately to manufacture beverages, which typically are packaged for distribution. A beverage syrup also may be distributed to bottlers, who package beverages made by addition of water and perhaps other materials like carbonation.

The beverage syrup can be a full-calorie beverage syrup such that a ready-to-drink beverage prepared from the beverage syrup has up to about 120 calories per 8 oz serving.

The beverage syrup can be a mid-calorie beverage syrup, such that a ready-to-drink beverage prepared from the beverage syrup has up to about 60 calories per 8 oz. serving.

The beverage syrup can be a low-calorie beverage syrup, such that a ready-to-drink beverage prepared from the beverage syrup has up to about 40 calories per 8 oz. serving.

The beverage syrup can be a zero-calorie beverage syrup, such that a ready-to-drink beverage prepared from the beverage syrup has less than about 5 calories per 8 oz. serving.

### D. Beverages

The present invention also provides ready-to-drink beverages prepared from the beverage syrups described herein and methods of preparing ready-to-drink beverages. In some embodiments, the beverage syrup is a concentrate of the present invention, i.e. without additional beverage ingredients.

Ready-to-drink beverages include carbonated and non-carbonated beverages. Carbonated beverages include, but are not limited to, frozen carbonated beverages, enhanced sparkling beverages, cola, fruit-flavored sparkling beverages (e.g. lemon-lime, orange, grape, strawberry and pineapple), ginger-ale, soft drinks and root beer. Non-carbonated beverages include, but are not limited to, fruit juice, fruit-flavored juice, juice drinks, nectars, vegetable juice, vegetable-flavored juice, sports drinks, energy drinks, enhanced water drinks, enhanced water with vitamins, near water drinks (e.g., water with natural or synthetic flavorants), coconut water, tea type drinks (e.g. black tea, green tea, red tea, oolong tea), coffee, cocoa drink, beverage containing milk components (e.g. milk beverages, coffee containing milk components, café au lait, milk tea, fruit milk beverages), beverages containing cereal extracts and smoothies.

A method of preparing a beverage comprises mixing a beverage syrup described herein with an appropriate quantity of diluting water.

Typically, the volumetric ratio of syrup to water is between 1:3 to 1:8, such as, for example, between 1:3 and 1:8, between 1:3 and 1:7, between 1:3 and 1:6, between 1:3 and 1:5, between 1:3 and 1:4, between 1:4 and 1:8, between 1:4 and 1:7, between 1:4 and 1:6, between 1:4 and 1:5, between 1:5 and 1:8, between 1:5 and 1:7, between 1:5 and 1:6, between 1:6 and 1:8, between 1:6 and 1:7 and between 1:7 and 1:8. In a particular embodiment, the volumetric ratio of syrup to water is about 1:5.5.

The temperature at which the mixing is done is preferably under about 70 °C to minimize degradation of steviol glycosides.

In one embodiment, the beverage is a carbonated beverage (e.g. fountain drink or soft drink) and the diluting water is carbonated water. The beverage is typically dispensed for immediate consumption.

Other types of water typical in beverage manufacturing and be used to prepare beverages, e.g. deionized water, distilled water, reverse osmosis water, carbon-treated water, purified water, demineralized water and combinations thereof.

Beverages prepared from concentrates or beverage syrups of the instant invention comprise from about 400 ppm to about 600 ppm steviol glycosides, such as, for example, about 500 ppm.

In some embodiments, the blend of the present invention is the only sweetener, i.e. the only substance that provides detectable sweetness to the beverage. Such beverages include, e.g. carbonated beverages, for example colas.

The beverage can be a full-calorie beverage that has up to about 120 calories per 8 oz serving.

The beverage can be a mid-calorie beverage that has up to about 60 calories per 8 oz. serving.

The beverage can be a low-calorie beverage that has up to about 40 calories per 8 oz. serving.

The beverage can be a zero-calorie that has less than about 5 calories per 8 oz. serving.

### EXAMPLES

In the following examples, "RebM80" refers to a steviol glycoside mixture containing at least 80% Reb M by weight (the majority of the remainder is Reb D). The total steviol glycoside content of the mixture is at least 95%.

"A95" refers to a blend having the following content:

| | **A95 Component** | **Percent, as determined by HPLC** |
|---|---|---|
| | Rebaudioside E | 0.86 |
| | Rebaudioside O | 1.37 |
| | Rebaudioside D | 63.95 |
| | Rebaudioside N | 2.95 |
| | Rebaudioside M | 25.37 |
| | Rebaudioside A | 1.32 |
| | Stevioside | 0.03 |
| | Rebaudioside C | 0.01 |
| | Rebaudioside B | 0.22 |
| **Total Steviol Glycoside Content** | | **96.07** |

Methods of obtaining A95 are provided in WO 2017/059414.

Reb M95 (crystalline form), Reb M80 (crystalline form), Reb M80 (amorphous form), Reb D95 (crystalline form), A95(amorphous form), Reb A, Alpha (reb A/reb B blend) & Glycosylated Steviol Glycosides (NSF02) were obtained from Pure Circle. Reb E 95% was obtained from Blue California. Quillaja extract is a sample from Naturex. Allulose (77% solids) was received from Tate & Lyle. Enzyme modified isoquercitrin (EMIQ) was obtained from San Ei Gen. Alpha, Beta and Gama-Cyclodextrin, W6, W7 & W8 were obtained from Wacker Chemicals. S-8131, S-818 and S-651 are food grade ingredients and obtained from Lab 4F. All of ingredients in this study were used without further processing or purification. De-ionized water was used for all experiments.

### EXAMPLE 1: Replacement of RebM80 with Reb A or Mogroside V (10-20 wt%)

Super concentrates (all 3 wt% total) were prepared by combining the indicated ingredients with water at room temperature. The mixtures were stirred for 30 mins. The appearance of the super concentrate was observed at seven time points after stirring ceased: 2 minutes, 7 minutes, 12 minutes, 17 minutes, 22 minutes, 27 minutes and 30 minutes.

**Table 2: Amorphous RebM80 Replacement with Reb A and Mogroside V**

| **Sample** | **RebM80 (wt%)** | **Reb A (wt%)** | **Mogroside V (wt%)** | **Observations** |
|---|---|---|---|---|
| **Control** | 3.0 | 0.0 | 0.0 | Initially clear, cloudy after 7 minutes |
| **2A (10% replacement)** | 2.7 | 0.3 | 0.0 | Initially clear, cloudy after 17 minutes |
| **3A (15% replacement)** | 2.55 | 0.45 | 0.0 | Initially clear, cloudy after ~27 minutes |
| **4A (20% replacement)** | 2.4 | 0.6 | 0.0 | Initially clear, cloudy after ~30 minutes |
| **2M (10% replacement)** | 2.7 | 0.0 | 0.3 | Initially clear, remained clear for at least 30 minutes |
| **3M (15% replacement)** | 2.55 | 0.0 | 0.45 | Initially clear, remained clear for at least 30 minutes |
| **4M (20% replacement)** | 2.4 | 0.0 | 0.6 | Initially clear, remained clear for at least 30 minutes |

The control, RebM80, is amorphous and initially the super concentrate was clear after stirring, but turned cloudy quickly. Replacement of RebM80 with Reb A and Mogroside V improved solubility, i.e. duration of clarity after mixing. Samples 2A, 3A and 4A are outside the scope of the present invention.

Certain super concentrates were diluted to 0.3 wt% with water and stirred for the indicated time. Observations were noted as follows:

**Table 3: 0.3 wt% dilutions**

| **Sample** | **Stirring Time** | **Appearance** |
|---|---|---|
| **Control** | 2-5 hours | Cloudy |
| **2A (10% replacement)** | 2-5 hours | Less cloudy than control |
| **4A (20% replacement)** | 2-5 hours | Clear |
| **2A (10% replacement)** | 60 hours | Less cloudy than control |
| **4A (20% replacement)** | 60 hours | Clear |
| **Control** | 15 hours | Cloudy |
| **2M (10% replacement)** | 15 hours | Clear |
| **3M (15% replacement)** | 15 hours | Clear |
| **5M (30% replacement)** | 15 hours | Clear |
| **Control** | 40 hours | Cloudy |
| **2M (10% replacement)** | 40 hours | Clear |
| **3M (15% replacement)** | 40 hours | Clear |
| **5M (30% replacement)** | 40 hours | Clear |

### EXAMPLE 2: Replacement of RebM80 with Reb A (20-35 wt%)

0.333 wt% lemon-lime samples containing amorphous RebM80 and 20-35 wt% replacement with Reb A were prepared with water and stirred for 5 hours. The appearance of the sample was noted after 5 hours as follows:

**Table 4: Appearance of 0.333 wt% lemon-lime samples**

| **Sample** | **Steviol Glycoside Composition** | **Appearance** |
|---|---|---|
| **Control (100 % RebM80)** | 0.333 wt% RebM80 | Cloudy |
| **20% Reb A replacement** | 0.266 wt% RebM80 | Clear |
| | 0.067 wt% Reb A | |
| **25% Reb A replacement** | 0.25 wt% RebM80 | Clear |
| | 0.083 wt% Reb A | |
| **30% Reb A replacement** | 0.233 wt% RebM80 | Clear |
| | 0.1 wt% Reb A | |
| **35 % Reb A replacement** | 0.216 wt% RebM80 | Clear |
| | 0.117% Reb A | |

This Example is outside the scope of the present claims.

### EXAMPLE 3: Replacement of RebM80 with Reb A in 1 wt% concentrates

1 wt% concentrates in water were prepared with amorphous RebM80 and 10-25 wt% replacement with Reb A and stirred for 3-23 hours. The appearance of the samples was noted at several time points after stirring: 3 hours, 5 hours, 7 hours and 23 hours. The appearance of the samples was observed as follows:

**Table 5: Appearance of 1 wt% RebM80/Reb A samples**

| **Sample** | **Steviol Glycoside Composition** | **Appearance** |
|---|---|---|
| **Control (100% RebM80)** | 1.0 wt% RebM80 | Cloudy at all time points |
| **10% Reb A Replacement** | 0.9 wt% RebM80 | Less cloudy compared to control at 3-7 hours, totally cloudy by 23 hours |
| | 0.1 wt% Reb A | |
| **20% Reb A Replacement** | 0.8 wt% RebM80 | Less cloudy than 10% Reb A Replacement at all time points, but not clear at any time points |
| | 0.2 wt% Reb A | |
| **25% Reb A Replacement** | 0.75 wt% RebM80 | Less cloudy than 20% Reb A Replacement at all time points, but not clear at any time points |
| | 0.25 wt% Reb A | |
| **35% Reb A Replacement** | 0.65% wt% RebM80 | Clear at all time points |
| | 0.35 wt% Reb A | |

This Example is outside the scope of the present claims.

### EXAMPLE 4: Replacement of RebM80 with Alpha (RebA/RebB blend)

Lemon-lime beverages (all containing 0.338 wt% steviol glycoside concentration) were prepared by combining the ingredients listed below with citric buffer and stirred. The appearance of the beverages was observed at several time points.

**Table 6: Effect of addition of Alpha and RA 95 on lemon & Lime beverage of Reb M80 (amorphous) based formulation**

| **Formula** | **Reb M 80 (wt%)** | **Alpha (wt%)** | **Reb A (wt%)** | **S-8131** | **S-651** | **S-818** | **Comment** |
|---|---|---|---|---|---|---|---|
| **Control (100% RebM80)** | 0.338 | - | - | 0.16 | 1.13 | 0.38 | Cloudy at day 0 |
| **20% Replacement** | 0.27 | 0.034 | 0.034 | 0.16 | 1.13 | 0.38 | Clear after 7 days |
| **25% Replacement** | 0.254 | 0.042 | 0.042 | 0.16 | 1.13 | 0.38 | Clear after 7 days |
| **30% Replacement** | 0.236 | 0.051 | 0.051 | 0.16 | 1.13 | 0.38 | Clear after 23 days |
| **35% Replacement** | 0.22 | 0.059 | 0.059 | 0.16 | 1.13 | 0.38 | Clear after 23 days |

This Example is outside the scope of the present claims.

### EXAMPLE 5: Impact of Various Solubilizing Aids

Samples having the wt% indicated below were prepared. The appearance of the samples was noted as follows:

**Table 7: Summary of combination of different steviol glycosides and solubilization aids on the Reb M/Reb D solution stability in concentrated syrup**

| **Formula** | **Reb M 80** | **A95** | **Reb A** | **GSG** | **Allu 77%** | **EMIQ R-20** | **W8** | **Quillaja extract** | **S-813** | **S-651** | **S-818** | **Comment** |
|---|---|---|---|---|---|---|---|---|---|---|---|---|
| 1 | 0.5 | - | - | - | - | - | - | - | 0.06 | 0.4 | - | Precipitated in 1 day |
| 2 | 0.4 | - | - | - | - | - | - | - | 0.06 | 0.4 | - | Precipitated in 1 day |
| 3 | 0.385 | - | - | - | - | - | - | - | 0.16 | 0.4 | - | Precipitated in 1 day |
| 4 | 0.385 | - | - | - | 19.3 | - | - | - | 0.16 | 1.13 | 0.38 | Precipitated in 2 day |
| 5 | 0.35 | - | - | - | - | - | - | - | 0.06 | 0.4 | - | Precipitated in 3 days |
| 6 | 0.35 | - | - | - | - | - | - | 0.35 | 0.06 | 0.4 | - | Precipitated in 3 days |
| 7 | 0.308 | - | - | - | - | - | - | - | 0.16 | 1.13 | 0.38 | Precipitated in 3 days |
| 8 | 0.5 | - | - | - | - | 0.5 | - | - | 0.06 | 0.4 | - | Precipitated in 6 days |
| 9 | 0.5 | - | - | - | - | - | - | 0.5 | 0.06 | 0.4 | - | Precipitated in 2 days |
| 10 | 0.5 | - | - | - | - | - | 0.5 | - | 0.06 | 0.5 | - | Precipitated in 2 days |
| 11 | 0.5 | - | - | - | - | 0.5 | - | - | 0.06 | 0.5 | - | Precipitated in 4 days |
| 12 | 0.4 | - | - | - | - | 0.4 | - | - | 0.06 | 0.4 | - | Precipitated in 4 days |
| 13 | 0.4 | - | - | - | - | - | - | 0.4 | 0.06 | 0.4 | - | Precipitated in 1 day |
| 14 | 0.4 | - | - | - | - | - | 0.4 | - | 0.06 | 0.4 | - | Precipitated in 5 days |
| 15 | 0.4 | - | - | 0.1 | - | - | - | - | 0.06 | 0.5 | - | Precipitated in 4 days |
| 16 | 0.429 | - | 0.078 | - | - | - | - | - | 0.06 | 0.4 | - | Precipitated in 5 days |
| 17 | 0.362 | - | 0.0 4 | - | - | - | - | - | 0.06 | 0.4 | - | Slight Precip In 5 days |
| 18 | 0.347 | - | 0.038 | - | 19.3 | - | - | - | 0.16 | 1.13 | 0.38 | Precipitated in 2 days |
| 19 | 0.347 | - | 0.038 | - | - | 0.19 | - | - | 0.16 | 1.13 | 0.38 | Slight Precip In 10 days |
| 20 | 0.347 | - | 0.038 | - | - | 0.385 | | - | 0.16 | 1.13 | 0.38 | Slight Precip In 7 days |
| 21 | 0.34 | - | 0.0 6 | - | - | - | - | - | 0.06 | 0.4 | - | Slight Precip In 5 days |
| 22 | 0.327 | - | 0.058 | - | - | - | | - | 0.16 | 1.13 | 0.38 | Slight Precip In 10 days |
| 23 | 0.327 | - | 0.058 | - | - | 0.19 | | - | 0.16 | 1.13 | 0.38 | no precipitation for > 14 days |
| 24 | 0.32 | - | 0.0 4 | 0.04 | - | 0.4 | - | - | 0.16 | 1.13 | 0.38 | Slight Precip In 10 days |
| 25 | 0.32 | - | 0.0 4 | 0.04 | - | 0.4 | - | - | 0.16 | 1.13 | 0.38 | Solution heated, no precipitation for > 14 days |
| 26 | 0.32 | - | 0.0 8 | - | - | - | - | - | 0.16 | 1.13 | 0.38 | Slight Precip in 10 days |

| | **Reb M 80** | **A95** | **Reb A** | **GSG** | **Allu 77%** | **EMIQ R-20** | **W8** | **Quillaja extract** | **S-813** | **S-651** | **S-818** | **Comment** |
|---|---|---|---|---|---|---|---|---|---|---|---|---|
| 27 | 0.32 | - | - | 0.08 | - | - | - | - | 0.06 | 0.4 | - | Slight Precip in 10 days |
| 28 | 0.32 | - | - | 0.08 | - | 0.4 | - | - | 0.06 | 0.4 | - | Solution heated, no precipitation for >14 days |
| 29 | 0.32 | - | - | 0.08 | - | 0.4 | - | - | 0.06 | 0.4 | = | no precipitation for > 14 days |
| 30 | 0.308 | - | 0.077 | - | - | - | - | - | 0.16 | 1.13 | 0.38 | no precipitation for > 14 days |
| 31 | | 0.30 8 | 0.077 | - | - | - | - | - | 0.16 | 1.13 | 0.38 | no precipitation for > 14 days |
| 32 | 0.3 | - | 0.1 | - | - | - | - | - | 0.06 | 0.4 | - | no precipitation for > 14 days |
| 33 | 0.3 | - | - | 0.1 | - | - | - | - | 0.06 | 0.4 | - | no precipitation for > 14 days |
| 34 | 0.289 | - | 0.096 | - | - | - | - | - | 0.16 | 1.13 | 0.38 | no precipitation for > 14 days |
| 35 | - | 0.28 9 | 0.096 | - | - | - | - | - | 0.16 | 1.13 | 0.38 | no precipitation for > 14 days |
| 36 | 0.28 | - | - | - | - | - | - | - | 0.06 | 0.5 | - | no precipitation for > 14 days |
| 37 | 0.28 | - | 0.12 | - | - | - | - | - | 0.06 | 0.5 | - | no precipitation for > 14 days |
| 38 | 0.28 | - | - | 0.12 | - | - | - | - | 0.06 | 0.5 | - | no precipitation for > 14 days |
| 39 | 0.28 | - | 0.12 (alpha ) | - | - | - | - | - | 0.06 | 0.5 | - | Slight Precip in 4 days |
| 40 | 0.275 | - | 0.032 | - | - | - | - | - | 0.16 | 1.13 | 0.38 | no precipitation for > 14 days |
| 41 | 0.275 | - | 0.032 | - | 19.3 | - | - | - | 0.16 | 1.13 | 0.38 | no precipitation for > 14 days |
| 42 | 0.25 | - | 0.15 | - | - | - | - | - | 0.06 | 0.4 | - | no precipitation for > 14 days |
| 43 | 0.25 | - | - | 0.15 | - | - | - | - | 0.06 | 0.4 | - | no precipitation for > 14 days |
| 44 | 0.25 | - | 0.075 | 0.075 | - | - | - | - | 0.06 | 0.4 | - | no precipitation for > 14 days |
| 45 | 0.237 | - | 0.101 | - | - | - | - | - | 0.16 | 1.13 | 0.38 | no precipitation for > 14 days |
| 46 | 0.237 | - | - | 0.101 | - | - | - | - | 0.16 | 1.13 | 0.38 | no precipitation for > 14 days |
| 47 | 0.237 | - | 0.101 (alpha ) | - | - | - | - | - | 0.16 | 1.13 | 0.38 | no precipitation for > 14 days |
| 48 | 0.212 | - | 0.126 | - | - | - | - | - | 0.16 | 1.13 | 0.38 | no precipitation for > 14 days |
| 49 | - | 0.38 5 | - | - | - | - | - | - | 0.16 | 1.13 | 0.38 | Slight Precip in 4 days |
| 50 | - | 0.34 7 | 0.038 4 | - | - | 0.19 | - | - | 0.16 | 1.13 | 0.38 | no precipitation for > 14 days |
| 51 | - | 0.34 7 | 0.038 4 | - | - | - | - | - | 0.16 | 1.13 | 0.38 | no precipitation for > 14 days |
| 52 | - | 0.34 7 | 0.038 4 | - | 19.3 | - | - | - | 0.16 | 1.13 | 0.38 | no precipitation for > 14 days |
| 53 | 0.195 | 0.19 5 | - | - | - | - | - | - | 0.16 | 1.13 | 0.38 | solution heated, no precipitation for >14 days |
| 54 | 0.195 | 0.19 5 | - | - | - | - | - | - | 0.16 | 1.13 | 0.38 | Precipitated in 0 days |

| | **Reb M 80** | **A95** | **Reb A** | **Reb E** | **Allu 77%** | **EMIQ R-20** | **W8** | **Quillaja extract** | **S-813** | **S-651** | **S-818** | **Comment** |
|---|---|---|---|---|---|---|---|---|---|---|---|---|
| 55 | 0.36 | **-** | **-** | 0.04 | **-** | **-** | **-** | **-** | 0.06 | 0.4 | - | Precipitated in 2 days |
| 56 | 0.35 | - | - | 0.05 | - | - | - | - | 0.06 | 0.4 | - | Precipitated in 2 days |
| 57 | 0.30 | - | - | 0.1 | - | - | - | - | 0.06 | 0.4 | - | Slight Precip In 7 days |
| 58 | 0.28 | - | - | 0.12 | - | - | - | - | 0.06 | 0.5 | - | Slight Precip in 4 days |

| | **Reb M 80** | **A95** | **Reb A** | **Mog V** | **Allu 77%** | **EMIQ R-20** | **W8** | **Quillaja extract** | **S-813** | **S-651** | **S-818** | **Comment** |
|---|---|---|---|---|---|---|---|---|---|---|---|---|
| 59 | 0.27 | | 0.0 3 | | | | | | 0.16 | 1.13 | 0.38 | **Turbid** |
| 60 | 0.24 | | 0.0 6 | | | | | | 0.16 | 1.13 | 0.38 | **Turbid** |
| 61 | 0.225 | | 0.0 75 | | | | | | 0.16 | 1.13 | 0.38 | OK after 1 day |
| 62 | 0.21 | | 0.0 9 | | | | | | 0.16 | 1.13 | 0.38 | OK after 1 day |
| 63 | 0.27 | | | 0.03 | | | | | 0.16 | 1.13 | 0.38 | **Turbid** |
| 64 | 0.24 | | | 0.06 | | | | | 0.16 | 1.13 | 0.38 | **Turbid** |
| 65 | 0.225 | | | 0.075 | | | | | 0.16 | 1.13 | 0.38 | Slight Turbid |
| 66 | 0.21 | | | 0.09 | | | | | 0.16 | 1.13 | 0.38 | OK after 1 day |
| 67 | 0.21 | | 0.0 3 | 0.06 | | | | | 0.16 | 1.13 | 0.38 | OK after 1 day |

### EXAMPLE 6: Replacement of RebM80 with EMIQ blends

Lemon-lime samples having the indicated wt% were prepared by combining the ingredients listed below with citric buffer and stirring. The appearance after 1 day was observed as noted:

**Table 8: Lemon-lime samples containing RebM80 and EMIQ**

| Sample | Concentrations | Appearance |
|---|---|---|
| 1 (0.384 wt% SG concentration) | 0.346 wt% RebM80 | Clear |
| | 0.038 wt% Reb A | |
| | 0.173 wt% EMIQ | |
| 2 (0.384 wt% SG concentration) | 0.326 wt% RebM80 | Clear |
| | 0.058 wt% Reb A | |
| | 0.173 wt% EMIQ | |
| 3 (0.4 wt% SG concentration) | 0.32 wt% RebM80 | Clear |
| | 0.4 wt% EMIQ | |
| | 0.04 wt% Reb A | |
| | 0.04 wt % GSG | |
| 4 (0.4 wt% SG concentration) | 0.32 wt% RebM80 | Clear |
| | 0.08 wt% GSG | |
| | 0.4 wt% EMIQ | |

### EXAMPLE 7: Replacement of Crystalline RebM80 with Reb A and Mog V

0.3 wt% samples were prepared with water and the ingredients indicated below. The samples were stirred for 20 hours. The appearance of the samples was noted after stirring ceased as follows:

**Table 10: Crystalline RebM80 and Reb A, Mog V or Reb A/Mog V Replacement**

| **Sample** | **Steviol Glycoside Concentration** | **Appearance** |
|---|---|---|
| **Control (100 wt% RebM80)** | 0.3 wt% RebM80 | Cloudy |
| | | |
| **10% Replacement (Reb A)** | 0.27 wt% RebM80 | Less cloudy than control, but not clear |
| | 0.03 wt% Reb A | |
| **20% Replacement (Reb A)** | 0.24 wt% RebM80 | Less cloudy than 10% Replacement, but not clear |
| | 0.06 wt% Reb A | |
| **25% Replacement (Reb A)** | 0.225 wt% RebM80 | Clear |
| | 0.075 wt% Reb A | |
| **30% Replacement (Reb A)** | 0.21 wt% RebM80 | Clear |
| | 0.09 wt% Reb A | |
| **10% Replacement (Mog V)** | 0.27 wt% RebM80 | Less cloudy than control, but not clear |
| | 0.03 wt% Mog V | |
| **20% Replacement (Mog V)** | 0.24 wt% RebM80 | Less cloudy than 10% Replacement, but not clear |
| | 0.06 wt% Mog V | |
| **25% Replacement (Mog V)** | 0.225 wt% RebM80 | Less cloudy than 20% Replacement, but not clear |
| | 0.075 wt% Mog V | |
| **30% Replacement (Mog V)** | 0.21 wt% RebM80 | Clear |
| | 0.09 wt% Mog V | |
| **30% Replacement (Reb A and Mog V)** | 0.21 wt% RebM80 | Clear |
| | 0.06 wt% Mog V | |
| | 0.03 wt% Reb A | |

Samples with 10, 20, 25 and 30% replacement (reb A) are outside the scope of the present claims.

## Claims

1. A method for improving the aqueous solubility of a steviol glycoside blend comprising substituting from about 10 wt% to about 70 wt% of said steviol glycoside blend with at least one of the following:
a. a composition comprising reb A wherein said composition further comprises mogroside V;
b. reb E;
c. a composition comprising at least one mogroside selected from the group consisting of mogroside V, mogroside IV, siamenoside I and the 1,6-α-isomer of siamenoside I (mogro-3-O-[β-D-glucopyranoside]-24-O-{[β-D-glucopyranosyl-(1→2)]-[α-D-glucopyranosyl-(1→6)]-β-D-glucopyranoside}) and combinations thereof; and
d. a composition comprising enzyme modified isoquercitrin;
to provide an improved blend having an aqueous solubility of at least about 0.25 wt%.

2. The method of claim 1, wherein the steviol glycoside blend is in amorphous form, crystalline form or a combination of amorphous and crystalline forms.

3. The method of claim 1 or claim 2, wherein from about 10 wt% to about 40 wt% of said steviol glycoside blend is substituted with a composition comprising reb A further comprising mogroside V; or wherein from about 40 wt% to about 70 wt% of said steviol glycoside blend is substituted with a composition comprising enzyme modified isoquercitrin (EMIQ).

4. The method of claim 3, wherein the composition comprising EMIQ further comprises reb A and optionally glucosylated steviol glycosides.

5. The method of any one of claims 1-4, wherein the improved blend has an aqueous solubility that is at least about 2.5x greater than the aqueous solubility of the steviol glycoside blend.

6. A blend comprising from about 30 wt% to about 90 wt% of a steviol glycoside blend and from about 10 wt% to about 70 wt% of one of the following:
a. a composition comprising reb A wherein said composition further comprises mogroside V;
b. reb E;
c. a composition comprising at least one mogroside selected from the group consisting of mogroside V, mogroside IV, siamenoside I and the 1,6-α-isomer of siamenoside I (mogro-3-O-[β-D-glucopyranoside]-24-O-{[β-D-glucopyranosyl-(1→2)]-[α-D-glucopyranosyl-(1→6)]-β-D-glucopyranoside}) and combinations thereof; and
d. a composition comprising enzyme modified isoquercitrin;
wherein the blend has an aqueous solubility of at least about 0.25 wt%.

7. The blend of claim 6, wherein the steviol glycoside blend is in amorphous form, crystalline form or a combination of amorphous and crystalline forms.

8. The blend of claim 6 or claim 7, comprising from about 10 wt% to about 40 wt% of the composition comprising reb A, wherein said composition further comprises mogroside V; or comprising about 40 wt% to about 70 wt% of a composition comprising enzyme modified isoquercitrin (EMIQ).

9. The blend of claim 8, wherein the composition comprising EMIQ further comprises reb A and optionally glucosylated steviol glycosides.

10. The blend of any one of claims 6-9, wherein the aqueous solubility of the blend is at least about 2.5x greater than the aqueous solubility of the steviol glycoside blend alone, when the blend and the steviol glycoside blend are measured at the same wt%.

11. A concentrate comprising the blend of any one of claims 6-10 in a concentration of about 0.25 wt% to about 3 wt%, wherein the concentrate is clear by visual inspection, optionally wherein the concentrate remains clear by visual inspection for at least one week.

12. A beverage comprising a concentrate of claim 11.

13. The beverage of claim 12, further comprising one or more additional sweeteners, functional ingredients, additives and combinations thereof.

14. The beverage of claim 12 or claim 13, wherein the beverage is selected from the group consisting of a zero-calorie beverage, a low-calorie beverage and a mid-calorie beverage; and/or wherein the beverage is selected from the group consisting of enhanced sparkling beverages, cola, fruit-flavored sparkling beverages, ginger-ale, soft drinks and root beer.

15. The beverage of claim 12, further comprising at least one additive selected from the group consisting of caramel, caffeine, phosphoric acid and citric acid.

## Patentansprüche

1. Verfahren zur Verbesserung der Wasserlöslichkeit einer Steviolglykosidmischung, bei dem man etwa 10 Gew.-% bis etwa 70 Gew.-% der Steviolglykosidmischung durch mindestens eines der folgenden ersetzt:
a. eine Reb A umfassende Zusammensetzung, wobei die Zusammensetzung weiterhin Mogrosid V umfasst,
b. Reb E,
c. eine mindestens ein aus der aus Mogrosid V, Mogrosid IV, Siamenosid I und dem 1,6-α-Isomer von Siamenosid I (Mogro-3-0-[β-D-glucopyrano-sid]-24-O-{[β-D-glucopyranosyl-(1→2)]-[α-D-glucopyranosyl-(1→6)]-β-D-glucopyranosid}) und Kombinationen davon bestehenden Gruppe ausgewähltes Mogrosid umfassende Zusammensetzung und
d. eine enzymmodifiziertes Isoquercitrin umfassende Zusammensetzung,
unter Bereitstellung einer verbesserten Mischung mit einer Wasserlöslichkeit von mindestens etwa 0,25 Gew.-%.

2. Verfahren nach Anspruch 1, wobei die Steviolglykosidmischung in amorpher Form, kristalliner Form oder einer Kombination von amorpher und kristalliner Form vorliegt.

3. Verfahren nach Anspruch 1 oder Anspruch 2, wobei etwa 10 Gew.-% bis etwa 40 Gew.-% der Steviolglykosidmischung durch eine Zusammensetzung ersetzt wird, die Reb A umfasst und weiterhin Mogrosid V umfasst, oder wobei etwa 40 Gew.-% bis etwa 70 Gew.-% der Steviolglykosidmischung durch eine Zusammensetzung ersetzt wird, die enzymmodifiziertes Isoquercitrin (EMIQ) umfasst.

4. Verfahren nach Anspruch 3, wobei die EMIQ umfassende Zusammensetzung weiterhin Reb A und gegebenenfalls glucosylierte Steviolglykoside umfasst.

5. Verfahren nach einem der Ansprüche 1-4, wobei die verbesserte Mischung eine Wasserlöslichkeit aufweist, die mindestens etwa 2,5x größer ist als die Wasserlöslichkeit der Steviolglykosidmischung.

6. Mischung, umfassend etwa 30 Gew.-% bis etwa 90 Gew.-% einer Steviolglykosidmischung und etwa 10 Gew.-% bis etwa 70 Gew.-% eines der folgenden:
a. eine Reb A umfassende Zusammensetzung, wobei die Zusammensetzung weiterhin Mogrosid V umfasst,
b. Reb E,
c. eine mindestens ein aus der aus Mogrosid V, Mogrosid IV, Siamenosid I und dem 1,6-α-Isomer von Siamenosid I (Mogro-3-O-[β-D-glucopyrano-sid]-24-O-{ [β-D-glucopyranosyl-(1→2)]-[α-D-glucopyranosyl-(1→6)]-β-D-glucopyranosid}) und Kombinationen davon bestehenden Gruppe ausgewähltes Mogrosid umfassende Zusammensetzung und
d. eine enzymmodifiziertes Isoquercitrin umfassende Zusammensetzung,
wobei die Mischung eine Wasserlöslichkeit von mindestens etwa 0,25 Gew.-% aufweist.

7. Mischung nach Anspruch 6, wobei die Steviolglykosidmischung in amorpher Form, kristalliner Form oder einer Kombination von amorpher und kristalliner Form vorliegt.

8. Mischung nach Anspruch 6 oder Anspruch 7, umfassend etwa 10 Gew.-% bis etwa 40 Gew.-% der Reb A umfassenden Zusammensetzung, wobei die Zusammensetzung weiterhin Mogrosid V umfasst, oder umfassend etwa 40 Gew.-% bis etwa 70 Gew.-% einer enzymmodifiziertes Isoquercitrin (EMIQ) umfassenden Zusammensetzung.

9. Mischung nach Anspruch 8, wobei die EMIQ umfassende Zusammensetzung weiterhin Reb A und gegebenenfalls glucosylierte Steviolglykoside umfasst.

10. Mischung nach einem der Ansprüche 6-9, wobei die Wasserlöslichkeit der Mischung mindestens etwa 2,5x größer ist als die Wasserlöslichkeit der Steviolglykosidmischung alleine, wobei die Mischung und die Steviolglykosidmischung beim gleichen Gew.-% gemessen werden.

11. Konzentrat, umfassend die Mischung nach einem der Ansprüche 6-10 in einer Konzentration von etwa 0,25 Gew.-% bis etwa 3 Gew.-%, wobei das Konzentrat gemäß visueller Inspektion klar ist, wobei das Konzentrat gegebenenfalls gemäß visueller Inspektion mindestens eine Woche klar bleibt.

12. Getränk, umfassend ein Konzentrat nach Anspruch 11.

13. Getränk nach Anspruch 12, weiterhin umfassend einen oder mehrere zusätzliche Süßstoffe, funktionelle Inhaltsstoffe, Zusatzstoffe und Kombinationen davon.

14. Getränk nach Anspruch 12 oder Anspruch 13, wobei das Getränk aus der aus einem kalorienfreien Getränk, einem kalorienarmen Getränk und einem Getränk mit mittlerem Kaloriengehalt bestehenden Gruppe ausgewählt ist und/oder wobei das Getränk aus der aus verbesserten kohlensäurehaltigen Getränken, Cola, kohlensäurehaltigen Getränken mit Fruchtgeschmack, Ginger Ale, Softdrinks und Root Beer bestehenden Gruppe ausgewählt ist.

15. Getränk nach Anspruch 12, weiterhin umfassend mindestens einen Zusatzstoff ausgewählt aus der aus Karamell, Koffein, Phosphorsäure und Citronensäure bestehenden Gruppe.

## Revendications

1. Procédé pour l'amélioration de la solubilité aqueuse d'un mélange de glycosides de stéviol comprenant la substitution d'environ 10 % en poids à environ 70 % en poids dudit mélange de glycosides de stéviol par au moins l'un des éléments suivants :
a. une composition comprenant du réb A, ladite composition comprenant en outre du mogroside V ;
b. du réb E ;
c. une composition comprenant au moins un mogroside choisi dans le groupe constitué par le mogroside V, le mogroside IV, le siaménoside I et l'isomère 1,6-α du siaménoside I (mogro-3-O-[β-D-glucopyranoside]-24-O-{[β-D-glucopyranosyl-(1→2)]-[α-D-glucopyranosyl-(1→6)]-β-D-glucopyranoside}) et des combinaisons correspondantes ; et
d. une composition comprenant de l'isoquercitrine modifiée par une enzyme ;
pour fournir un mélange amélioré ayant une solubilité aqueuse d'au moins environ 0,25 % en poids.

2. Procédé selon la revendication 1, le mélange de glycosides de stéviol étant sous forme amorphe, sous forme cristalline ou une combinaison de formes amorphes et cristallines.

3. Procédé selon la revendication 1 ou la revendication 2, d'environ 10 % en poids à environ 40 % en poids dudit mélange de glycosides de stéviol étant substitués par une composition comprenant du réb A comprenant en outre du mogroside V ; ou d'environ 40 % en poids à environ 70 % en poids dudit mélange de glycosides de stéviol étant substitués par une composition comprenant de l'isoquercitrine modifiée par une enzyme (EMIQ).

4. Procédé selon la revendication 3, la composition comprenant de l'EMIQ comprenant en outre du réb A et éventuellement des glycosides de stéviol glucosylés.

5. Procédé selon l'une quelconque des revendications 1 à 4, le mélange amélioré ayant une solubilité aqueuse qui est au moins environ 2,5 fois plus grande que la solubilité aqueuse du mélange de glycosides de stéviol.

6. Mélange comprenant d'environ 30 % en poids à environ 90 % en poids d'un mélange de glycosides de stéviol et d'environ 10 % en poids à environ 70 % en poids de l'un des éléments suivants :
a. une composition comprenant du réb A, ladite composition comprenant en outre du mogroside V ;
b. du réb E ;
c. une composition comprenant au moins un mogroside choisi dans le groupe constitué par le mogroside V, le mogroside IV, le siaménoside I et l'isomère 1,6-α du siaménoside I (mogro-3-O-[β-D-glucopyranoside]-24-O-{(β-D-glucopyranosyl-(1→2)]-[α-D-glucopyranosyl-(1→6)]-β-D-glucopyranoside}) et des combinaisons correspondantes ; et
d. une composition comprenant de l'isoquercitrine modifiée par une enzyme ;
le mélange ayant une solubilité aqueuse d'au moins environ 0,25 % en poids.

7. Mélange selon la revendication 6, le mélange de glycosides de stéviol étant sous forme amorphe, sous forme cristalline ou une combinaison de formes amorphes et cristallines.

8. Mélange selon la revendication 6 ou la revendication 7, comprenant d'environ 10 % en poids à environ 40 % en poids de la composition comprenant du réb A, ladite composition comprenant en outre du mogroside V ; ou comprenant d'environ 40 % en poids à environ 70 % en poids d'une composition comprenant de l'isoquercitrine modifiée par une enzyme (EMIQ).

9. Mélange selon la revendication 8, la composition comprenant de l'EMIQ comprenant en outre du réb A et éventuellement des glycosides de stéviol glucosylés.

10. Mélange selon l'une quelconque des revendications 6 à 9, la solubilité aqueuse du mélange étant au moins environ 2,5 fois plus grande que la solubilité aqueuse du mélange de glycosides de stéviol seul, lorsque le mélange et le mélange de glycosides de stéviol sont mesurés au même % en poids.

11. Concentré comprenant le mélange selon l'une quelconque des revendications 6 à 10 en une concentration d'environ 0,25 % en poids à environ 3 % en poids, le concentré étant limpide à l'inspection visuelle, éventuellement le concentré restant limpide à l'inspection visuelle pendant au moins une semaine.

12. Boisson comprenant un concentré selon la revendication 11.

13. Boisson selon la revendication 12, comprenant en outre un ou plusieurs édulcorants, ingrédients fonctionnels et additifs supplémentaires et des combinaisons correspondantes.

14. Boisson selon la revendication 12 ou la revendication 13, la boisson étant choisie dans le groupe constitué par une boisson à zéro calorie, une boisson peu calorique et une boisson moyennement calorique ; et/ou la boisson étant choisie dans le groupe constitué par des boissons gazeuses enrichies, un cola, des boissons gazeuses aromatisées aux fruits, une bière au gingembre, des boissons sans alcool et une racinette.

15. Boisson selon la revendication 12, comprenant en outre au moins un additif choisi dans le groupe constitué par le caramel, la caféine, l'acide phosphorique et l'acide citrique.
